Europäisches Patentamt

European Patent Office

Office européen des brevets

(11) Publication number: **0 044 707**
**B1**

# EUROPEAN PATENT SPECIFICATION

(45) Date of publication of patent specification: **14.10.87**

(51) Int. Cl.⁴: **G 01 G 23/37,** G 01 G 23/01

(21) Application number: **81303259.6**

(22) Date of filing: **15.07.81**

(54) An electronic balance.

(30) Priority: **17.07.80 JP 98632/80**
**30.09.80 JP 137243/80**

(43) Date of publication of application:
**27.01.82 Bulletin 82/04**

(45) Publication of the grant of the patent:
**14.10.87 Bulletin 87/42**

(84) Designated Contracting States:
**CH DE FR GB LI**

(56) References cited:
**DE-B-2 601 151**
**GB-A-1 487 560**

**Mc-Graw-Hill Encyclopedia of Science and
Technology, 1977, Heading: Balance, pp. 74,
74A, 74B, 75**

(73) Proprietor: **KABUSHIKI KAISHA SHIMADZU
SEISAKUSHO**
**378, Ichinofunairi-Cho Nijo-Sagaru
Kawaramachi-Dori**
**Nakagyo-Ku Kyoto-shi Kyoto 604 (JP)**

(72) Inventor: **Yano, Shozo**
**5-8, Gokasho Hibarijima**
**Uji,shi Kyoto 611 (JP)**
Inventor: **Hujinaga, Yasuhiro**
**2, Kitaenmachi Nishinokyo**
**Nakagyo-ku Kyoto-shi Kyoto 604 (JP)**
Inventor: **Komoto, Akira**
**3-10, Fujio Okumachi**
**Otsu-shi Shiga 520 (JP)**
Inventor: **Kawara, Toshio**
**8-140, Kanshuuji Shibayama**
**Yamashina-ku Kyoto-shi Kyoto 607 (JP)**

(74) Representative: **Smith, Philip Antony et al
REDDIE & GROSE 16 Theobalds Road
London WC1X 8PL (GB)**

Courier Press, Leamington Spa, England.

## Description

The present invention relates to an electronic balance comprising a tray on which a sample to be weighed is placed, a support connected with the tray, weights which are carried by the support and can be selectively removed to approximately balance the weight of the sample, and a measuring section to precisely balance the weight of the sample and to produce an output signal representing the force applied by the measuring section.

The "McGraw-Hill Encyclopedia of Science and Technology", 1977 Edition, in its entry for "Balance" on pages 74 to 75 describes the principle of the substitution balance in which "when the unknown sample is placed in the pan, known calibrated weights are removed from the beam until the system equilibrates". It also describes the electronic weighing system in which the pan support is returned to its zero position by an electromagnetic force generated by a current proportional to the weight of the pan.

There is known an electronic balance which is devised so as to counterbalance a weight (to be measured) both with a force generated by an electronic force transducer and with balancing weights. The balance of this type is provided therein with not only an electromagnetic force transducer but also a plurality of balancing weights. A weight placed on the weighing tray of the balance is roughly counterbalanced first with some or all of the balancing weights, and then precisely balanced by the electromagnetic force transducer. In such a balance it is essential to prepare the balance weights having precise and right values. However, the manufacturing or preparation of such precise balance weight is very troublesome or very expensive, thereby increasing the production cost.

Even if such expensive reference weights are employed, their masses are subjected to variation due to wear after a long period of use. Thus readjustment is frequently required.

German Auslegeschrift DE—A—2601151 describes a system in which the ratio of a known reference weight to its measured value is stored and used as a correction factor for subsequent weighing of samples.

The present invention is characterized by a memory for storing data with respect to the masses of each of the weights, an input unit for entering the said data in the memory, an arithmetic unit for obtaining a measured weight value dependent on the weights in use, their masses as stored in the memory, and the output signal from the measuring section, and an output unit for outputting the measured value from the arithmetic unit.

The invention will be described in more detail with reference to the accompanying drawing which is a schematic diagram of an embodiment of the present invention.

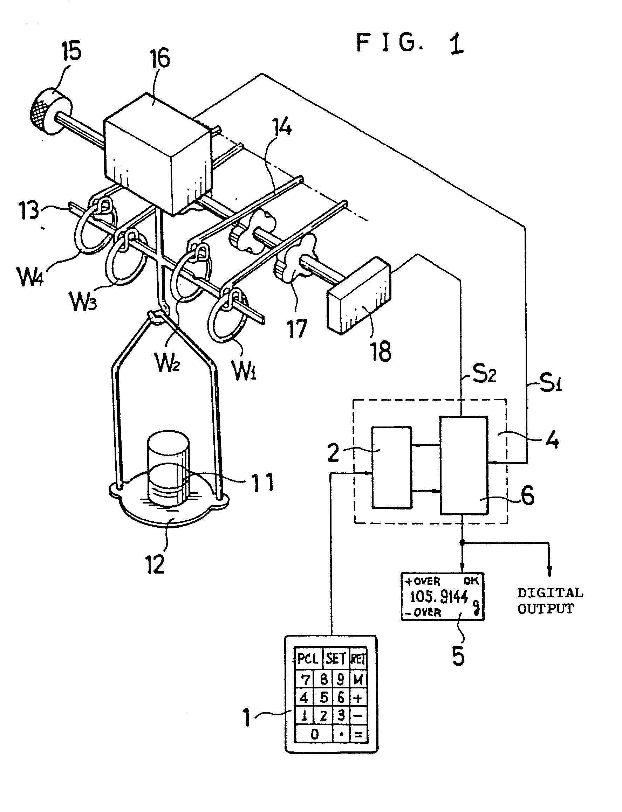

Referring to Figure 1, this includes a tray 12 on which a sample 11 is placed, the tray being directly connected to a measuring section 16, and four weights $W_1$ to $W_4$ having different masses which can rest on a bar 13 or be supported on supporters 14. More in detail, the balance additionally includes a rotatable knob 15 for optionally lifting any of the weights with the help of a cam mechanism designed so as to lift the supporter 14 to cause the weight to be free from the bar 13. The reference numeral 18 designates a rotary switch. The measuring section 16 and the rotary switch 18 are connected to an arithmetic unit 6. In an automatic balance the knob 15 will be unnecessary. A memory 2 is preferably provided with a battery so as to effect memory even when the current supply is cut off, or the memory 2 uses a non-volatile memory means.

The measuring section 16 subtracts the total weight of the loaded weights W from the weight of the sample 11 on the tray 12, and transmits the measured value in the form of a signal $S_1$ to the arithmetic unit 6. The rotary switch 18 produces a signal $S_2$ and transmits it to the arithmetic unit 6. In response to the signal $S_2$ the arithmetic unit 6 determines either the addition (positive addition) of the subtraction (negative addition) of the loaded weights $W_1$ to $W_4$, and accordingly processes the signal $S_1$ and the masses of the reference weights stored at the memory 2. On the keyboard 1 the PCL key is to check the stored masses of each weight W, and the RET key is to initiate the measuring mode.

To visually examine the adequacy of loading of balance weights on the bar 13 with respect to the weight of the sample 11 on the tray 12, the arithmetic unit 6 instructs the display 5 to indicate the state of the loading whereby the display 5 indicates (+) or (−) OVER or OK.

In operation, the masses of each weight $W_1$ to $W_4$ are input to the keyboard 1. The masses thereof are previously measured by means of a separate high precision scale. For example, let it be that a weight having nominal weight of 20g precisely weighs 20.0032g, and that another having nominal weight of 80g precisely weighs 79.3685g. These precise values are input to the keyboard 1 by pressing the SET key, the keys for "20", the (=) key, the keys for "20.0032" and finally the M key for memory instruction. In this way these precise values are stored in memory.

The sample 11 is placed on the tray 12, and while rotating the knob 15, the display 5 is watched until the lamp "OK" is lighted. Until then the lamp will indicate (+) OVER or (−) OVER. It is necessary to rotate the knob 15 patiently until the lamp "OK" illuminates. In the embodiment shown in Figure 1 the weights $W_1$ and $W_3$ are added, and the weights $W_2$ and $W_4$ are withdrawn from the bar 13, whereby the latter two weights are negated in measuring. This is transmitted to the arithmetic unit 6 as the signal S2 through the rotary switch 18. The arithmetic unit 6 adds 79.3685g for 80g and 20.0032 for 20g, which are both stored at the memory 2, and further adds to them 6.5427g obtained in the measuring section 16, which value is for all the weights except for the loaded weights W. In this way the total weight 105.9144g is obtained, which is output by the display 5.

If any error is found in obtaining the masses of the loaded weights, the erroneous memory at the memory 2 can be corrected through the keyboard 1. For example, when a reference weight of 10g is placed on the tray 12, and if the displayed output shows that the precise value be 0.0003g lighter, the erroneous memory can be corrected by pressing the SET key, the keys for "10", the (=) key, the keys for "0.0003", the (−) key, and finally the M key, whereby 0.0003g is subtracted from the erroneous value in memory.

## Claim

An electronic balance comprising a tray (12) on which a sample (11) to be weighed is placed, a support (13) connected with the tray, weights ($W_1$ to $W_4$) which are carried by the support and can be selectively removed to approximately balance the weight of the sample, and a measuring section (16) to precisely balance the weight of the sample and to produce an output signal ($S_1$) representing the force applied by the measuring section, characterized by a memory (2) for storing data with respect to the masses of each of the weights, an input unit (1) for entering the said data in the memory, an arithmetic unit (6) for obtaining a measured weight value dependent on the weights in use, their masses as stored in the memory, and the output signal from the measuring section, and an output unit (5) for outputting the measured value from the arithmetic unit.

## Patentanspruch

Elektronische Waage mit einer Schale (12), auf welcher eine zu wiegende Probe (11) plaziert wird, einer mit der Schale verbundenen Halterung (13), Gewichten ($W_1$ bis $W_4$), die auf der Halterung abgestüzt sind und wahlweise entfernt werden können, um das Gewicht der Probe ungefähr auszubalancieren, und mit einem Meßabschnitt (16) zum genauen Ausbalancieren des Gewichts der Probe und zum Erzeugen eines Ausgangssignals ($S_1$), das der an dem Meßabschnitt angreifenden Kraft entspricht, gekennzeichnet durch einen Speicher (2) zum Speichern von Daten bezüglich der Massen von jedem der Gewichte, eine Eingabeeinheit (1) zum Eingeben der genannten Daten in den Speicher, eine Recheneinheit (6) zum Erhalt eines gemessenen Gewichtswertes in Abhängigkeit von den verwendeten Gewichten, ihren im Speicher gespeicherten Massen und dem Ausgangssignal des Meßabschnitts, und eine Ausgabeeinheit (5) zum Ausgeben des gemessenen Wertes aus der Recheneinheit.

## Revendication

Balance électronique comprenant un plateau (12) sur lequel est placé un échantillon (11) à peser, un support (13) relié au plateau, des poids ($W_1$ à $W_4$) qui sont portés par le support et peuvent être enlevés sélectivement afin d'équilibrer approximativement le poids de l'échantillon, et une section de mesure (16) adaptée à équilibrer avec précision le poids de l'échantillon et à fournir un signal de sortie ($S_1$) représentant la force appliquée par la section de mesure, caractérisée par une mémoire (2) propre à enregistrer des données relatives à la masse de chacun des poids, une unité d'entrée (1) propre à introduire lesdites données dans la mémoire, une unité arithmétique (6) propre à fournir une valeur de poids mesurée dépendant des poids en utilisation, de leurs masses telles qu'enregistrées dans la mémoire et du signal de sortie fourni par la section de mesure, et une unité de sortie (5) propre à sortir la valeur mesurée fournie par l'unité arithmétique.

F I G. 1